# EUROPEAN PATENT APPLICATION

(11) **EP 4 663 943 A1**
(43) Date of publication of application: **17.12.2025**
(21) Application number: 24181657.8
(22) Date of filing: 12.06.2024
(51) Int. Cl.: F03D 1/06, F03D 17/00

(54) **A METHOD OF DESIGNING A WIND TURBINE ROTOR BLADE**

(71) Applicant: Nordex Energy SE & Co. KG, 22419 Hamburg (DE)
(72) Inventor: Dibbern, Adrian, 22419 Hamburg (DE); Zarochentsev, Alexander, 22419 Hamburg (DE)
(74) Representative: Hauck Patent- und Rechtsanwälte PartmbB

(57) **Abstract**

A method of designing a wind turbine rotor blade, comprising the following steps:
• providing a first wind turbine rotor blade design which includes a blade root and a blade tip,
• providing a second wind turbine rotor blade design comprising the first wind turbine rotor blade design and a root extension,
• determining an annual energy production gap by comparing an estimated annual energy production of a wind turbine comprising the second wind turbine rotor blade design to a reference annual energy production of a reference wind turbine comprising a reference wind turbine rotor blade design having the same length as the second wind turbine rotor blade design,
• providing a final wind turbine rotor blade design based on the second wind turbine rotor blade design by replacing a tip section of the second wind turbine rotor blade design with an extended tip section, wherein a length of the extended tip section is selected such that the annual energy production gap is closed.

## Description

The invention relates to a method of designing a wind turbine rotor blade.

Designing wind turbine rotor blades for modern wind turbines is a highly complex process, because many different and partly contradictory requirements must be met. Among other things, aerodynamic efficiency, mechanical stability both under extreme and fatigue loads, regulatory guidelines, ease of manufacturing, transportation and installation, lightning protection need to be considered. Designing a new wind turbine rotor blade from scratch therefore is difficult, costly and time-consuming.

Departing therefrom, it is an object of the invention to provide a method of designing a wind turbine rotor blade based on an existing wind turbine rotor blade design and offering predictable improvements in annual energy production with limited design effort, as well as to provide a corresponding wind turbine rotor blade.

This object is solved by the method of designing a wind turbine rotor blade of claim 1. The method comprises the following steps:
- providing a first wind turbine rotor blade design which includes a blade root and a blade tip,
- providing a second wind turbine rotor blade design comprising the first wind turbine rotor blade design and a root extension having an inner end configured to be connected to a wind turbine rotor hub and an outer end connected to the blade root of the first wind turbine rotor blade design,
- determining an annual energy production gap by comparing an estimated annual energy production of a wind turbine comprising the second wind turbine rotor blade design to a reference annual energy production which corresponds to an estimated annual energy production of a reference wind turbine comprising a reference wind turbine rotor blade design having the same length as the second wind turbine rotor blade design,
- providing a final wind turbine rotor blade design based on the second wind turbine rotor blade design by replacing a tip section of the second wind turbine rotor blade design with an extended tip section, wherein a length of the extended tip section is selected such that the annual energy production gap is closed.

The first wind turbine rotor blade design corresponds to a complete wind turbine rotor blade having a blade root and a blade tip. It may correspond to a first wind turbine rotor blade that has previously been manufactured in series. However, the term "design" does not refer to a real wind turbine rotor blade, but essentially to a data set describing the aerodynamic surface and at least in part the internal construction of such a wind turbine rotor blade. Based on the data set, the performance of a wind turbine rotor blade corresponding to the respective design can be analysed. For example, based on a certain wind turbine rotor blade design, one may calculate power extracted from the wind at a given wind speed with a wind turbine equipped with one or more wind turbine rotor blades corresponding to the specific design. One may also calculate an annual energy production based on the respective data set when making suitable assumptions.

In a second step of the inventive method, a second wind turbine rotor blade design is provided. This second wind turbine rotor blade design comprises the first wind turbine rotor blade design and a root extension. In other words, the second wind turbine rotor blade design includes the complete first wind turbine rotor blade design plus the root extension. The length of the second wind turbine rotor blade design therefore is greater than the first wind turbine rotor blade design by the length of the root extension.

The inner end of the root extension can be connected to a wind turbine rotor hub, so that a complete wind turbine rotor can be formed based on a suitable number of wind turbine rotor blades corresponding to the second wind turbine rotor blade design. This allows calculating an estimated annual energy production of a wind turbine comprising the second wind turbine rotor blade design. In accordance with the invention, this estimated annual energy production is compared to a reference annual energy production which corresponds to an estimated annual energy production of a reference wind turbine comprising the reference wind turbine rotor blades. Importantly, the reference wind turbine rotor blade design has the same length as the second wind turbine rotor blade design.

At least a central part of the second wind turbine rotor blade design is identical to the first wind turbine rotor blade design which had originally been optimized for being operated under predetermined conditions when connected directly to a wind turbine rotor hub, without the root extension. The second wind turbine rotor blade design has only a suboptimal aerodynamic performance due to the root extension, compared to a rotor blade having the same length as the second rotor blade design and being designed in the same way as the first rotor blade design (reference wind turbine rotor blade design). The comparison of the estimated annual energy production to the reference annual energy production therefore leads to an annual energy production gap.

The reference annual energy production may be calculated based on a reference wind turbine rotor blade design basically by the same process as has been described for the estimated annual energy production of the second wind turbine rotor blade design. However, the reference annual energy production can be established in any simplified form, for example based on a lookup table or on a mathematical function describing a maximum annual energy production of a wind turbine having a rotor diameter corresponding to a wind turbine rotor blade design having the same length as the second wind turbine rotor blade design. In any event, the determined annual energy production gap will indicate to what extent the second wind turbine rotor blade design falls short of a reference annual energy production.

The final wind turbine rotor blade design is provided based on the second wind turbine rotor blade design and taking into account the annual energy production gap. To this end, (within the mathematical model/data set) a tip section of the second wind turbine rotor blade design is replaced with an extended tip section. The extended tip section is somewhat longer than the replaced tip section, and therefore leads to an increase of the estimated annual energy production. In accordance with the invention, the length of the extended tip section is selected such that the annual energy production gap is closed. This means the final wind turbine rotor blade design will have an estimated annual energy production that is equivalent to or greater than the reference annual energy production. The imperfections of the second wind turbine rotor blade design are thus at least compensated by replacing the tip section. The final rotor blade design will have a slightly greater length than the reference wind turbine rotor blade design, but will have at least the same annual energy production.

The inventors realized that an existing (first) wind turbine rotor blade design can be reused to a large extent by simply adding a root extension and by compensating for the suboptimal performance of the resulting second wind turbine rotor blade design by modifying the tip section. It is seen as a great advantage that the majority of the existing wind turbine rotor blade design can be used for the final wind turbine rotor blade design, if desired also during manufacturing of a wind turbine rotor blade in accordance with the final wind turbine rotor blade design, because not only the data, but possibly also at least some of the established preforms or manufacturing tools developed for the first wind turbine rotor blade design can be used for the new wind turbine rotor blade. We note, however, that the part of the final wind turbine rotor blade design which is based on the first wind turbine rotor blade design does not need to be completely identical with the first wind turbine rotor blade design. Some modifications may be carried out, for example adding extra layers for reinforcing a load carrying structure and/or a redesign of certain elements.

The inventive method offers a fast and straightforward approach towards a new wind turbine rotor blade design and also towards a corresponding manufacturing process that can build on previous work done already for the first wind turbine rotor blade design.

In an aspect, the outer end of the root extension comprises a first interface configured to be connected to the blade root of the first wind turbine rotor blade design. The first interface provides a well-defined structure at the outer end of the root extension. This structure provides a seamless transfer between the root extension and the blade root of the first wind turbine rotor blade design. The first interface may be a feature of the data set only. When manufacturing a wind turbine rotor blade corresponding to the final wind turbine rotor blade design, the first interface may or may not be realized in hardware as well. An example of a hardware realization of the first interface is an outer end of the root extension that includes connection means similar to connection means arranged at a wind turbine rotor hub, e.g. a flange.

In an aspect, the step of replacing the tip section of the second wind turbine rotor blade design by the extended subsection includes the following steps:
- removing the tip section of the second wind turbine rotor blade design,
- providing a second interface at an outer end of a remaining section of the second wind turbine rotor blade design after the blade tip has been removed,
- connecting the extended tip section to the second interface.

All of these steps may be carried out in the design phase, that is within a computer model/data set only. However, the second interface may be implemented also in hardware, if desired, for example by providing at the outer end of the remaining section connection means such as are typically used for an inner blade connection in a segmented wind turbine rotor blade.

In an aspect, the second interface at the outer end of the remaining section has a cross section shaped as an aerodynamic profile. The outer surface of the wind turbine rotor blade smoothly transfers at the second interface from the remaining section into the extended tip section.

In an aspect, the first interface at the outer end of the root extension has a circular cross section. The inner end of the root extension may also have a circular cross section, so that the root extension may be shaped essentially tubular or conical. It has a simple shape which can easily be integrated into the final wind turbine rotor blade design and can also be manufactured with ease.

In an aspect, a maximum chord position is located between the first interface and the second interface. The segment of the final wind turbine rotor blade design between these two interfaces corresponds essentially to what is left from the first wind turbine rotor blade design. The final wind turbine rotor blade design will have the same maximum chord as the first wind turbine rotor blade design.

In an aspect, the root extension is adapted to be manufactured as a separate piece configured to be mounted to the blade root of the first wind turbine rotor blade design. As mentioned above, the root extension may for example be manufactured as a tubular blade segment including suitable connection means at its inner and outer ends. The connection means at the outer end may correspond to connection means typically used at a wind turbine rotor hub/wind turbine rotor blade connection.

In an aspect, the extended tip section is adapted to be manufactured as a separate piece configured to be mounted to the remaining section. Mounting of the extended tip section and/or of the root extension may be carried out at an installation site of the wind turbine.

In an aspect, the final wind turbine rotor blade design is adapted to be manufactured in one piece. The wind turbine rotor blade including the extended tip section and the remaining section with the root extension is manufactured in one piece, for example based on two half shells extending from the inner end of the root extension to the tip end of the extended tip section. Both half shells and possibly additional parts such as one or more shear webs are glued together to form the final wind turbine rotor blade. The final wind turbine rotor blade after production must be transported to an installation site in one piece.

In an aspect, the root extension and the extended tip section are configured to be mounted by different connection technologies. For example, the root extension may be mounted to the blade root of the first wind turbine rotor blade design by a bolted connection, while the extended tip section may be mounted to the remaining section by a glued connection. Connection technologies to be distinguished include separable and inseparable connections, bolted connections and glued connections, for example.

In an aspect, the root extension is selected from a set of predefined root extensions having different lengths and/or the extended tip section is selected from a set of predefined extended tip sections having different lengths. Selecting from a set of predefined root extensions and/or extended tip sections can further limit the design effort. In addition, a set of predefined root extensions and/or a set of predefined extended tip sections may not only be provided within a computer model/data set, but also as a set of corresponding pre-manufactured parts. Then, not only the final wind turbine rotor blade design, but also a wind turbine rotor blade corresponding to this design can be provided and build as a modular system.

In an aspect, the step of determining the annual energy production gap includes calculating the estimated annual energy production and/or the reference annual energy production based on site-specific conditions, including environmental conditions and/or wind turbine related conditions. Environmental conditions may include for example an IEC wind class or an average air temperature. Wind turbine related conditions may include for example a maximum tower height.

The above object is also solved by a wind turbine rotor blade of claim 13. The wind turbine rotor blade corresponds to the final rotor blade design of any of the claims 1 to 12 and is manufactured by the following steps:
- producing a wind turbine rotor blade central section corresponding to a remaining section of the second wind turbine rotor blade design,
- producing the extended tip section, and
- producing the root extension.

These steps may be carried out simultaneously or in any order.

In an aspect, the wind turbine rotor blade central section and the extended tip section are manufactured in one piece. As has been mentioned above, this can be carried out for example by manufacturing two half shells extending over the entire length of the wind turbine rotor blade, and by connecting these two half shells and possibly additional components such as one or more shear webs by gluing. In this embodiment, the root extension is manufactured as a separate piece.

In an aspect, the wind turbine rotor blade central section, the extended tip section and the root section are produced as separate pieces and the extended tip section and the root section are mounted to the wind turbine rotor blade central section.

In the following, the invention is explained in greater detail with reference to embodiments shown in drawings. The drawings show:
- Fig. 1: an illustration of four wind turbine rotor blade designs in a top view,
- Fig. 2: a wind turbine rotor blade manufactured in three pieces in a top view,
- Fig. 3: a root extension with a first interface in a perspective view, and
- Fig. 4: an extended tip section and an outer end of a remaining section in a perspective view.

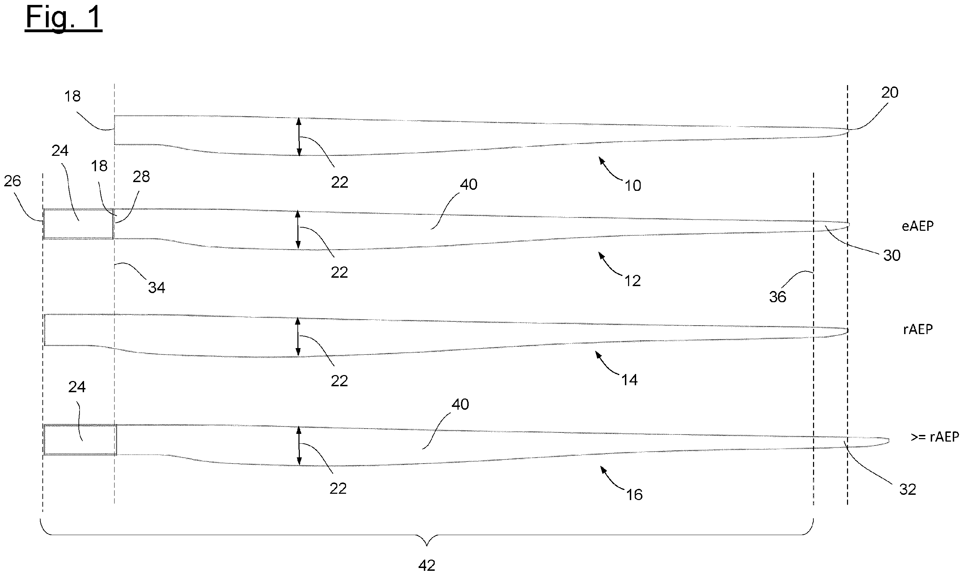

Figure 1 shows four wind turbine rotor blade designs illustrating the steps of the inventive method. From top to bottom, there are shown views on the suction side of: a first wind turbine rotor blade design 10, a second wind turbine rotor blade design 12, a reference wind turbine rotor blade design 14 and a final wind turbine rotor blade design 16. Each of these designs is illustrated based on a data set of a computer model.

The first wind turbine rotor blade design 10 includes a blade root 18 and a blade tip 20. It corresponds to an already existing wind turbine rotor blade that has been produced in series. A length of the first wind turbine rotor blade design 10 is about 88 m. At a radial position between the blade root 18 and the blade tip 20, the first wind turbine rotor blade design 10 has a maximum chord 22 of about 4.30 m.

Below the first wind turbine rotor blade design 10, Fig. 1 shows a second wind turbine rotor blade design 12 comprising the complete first wind turbine rotor blade design 10 and a root extension 24. The root extension 24 has an inner end 26 and an outer end 28. The inner end 26 is configured to be connected to a wind turbine rotor blade hub (not shown). The outer end 28 is connected to the blade root 18 of the first wind turbine rotor blade design 10. The root extension 24 has a length of about 6 m, so the total length of the second wind turbine rotor blade design 12 is about 94 m. The maximum chord 22 of the second wind turbine rotor blade design 12 is the same as the maximum chord 22 of the first wind turbine rotor blade design 10, but due to the addition of the root extension 24 is located at a radial position relatively further outboard.

Based on the second wind turbine rotor blade design 12, an estimated annual energy production eAEP is calculated. This calculation takes into account site specific conditions and wind turbine specific conditions and leads to an estimated annual energy production eAEP of about 25 GWh.

Below the second wind turbine rotor blade design 12, Fig. 1 shows a reference wind turbine rotor blade design 14. It has the same length as the second wind turbine rotor blade design 12. When comparing the shape of the reference wind turbine rotor blade 14 to the shape of the second wind turbine rotor blade 12, one notices that the radial position of the maximum chord 22 of the reference rotor blade design 14 is further inboard than it is for the second wind turbine rotor blade design 12. In contrast to the second wind turbine rotor blade design 12, the reference rotor blade design 14 has been optimized for maximum annual energy production.

Under the same conditions as taken into account when calculating the estimated annual energy production eAEP of the second wind turbine rotor blade design 12, the reference wind turbine rotor blade design 14 provides a reference annual energy production rAEP of about 25.4 GWh. The annual energy production gap therefore is 25.4 GWh - 25 GWh = 0.4 GWh, corresponding to about 1.6 %.

To the bottom of Fig. 1, there is shown a final wind turbine rotor blade design 16. It has been provided by replacing a tip section 30 having a length of about 2 m by an extended tip section 32 having a length of about 5 m. The total length of the final wind turbine rotor blade design is 94 m - 2 m + 5 m = 97 m, which is 3 m longer than the length of the reference wind turbine rotor blade design 14. This extra length leads to an increase in annual energy production sufficient to close the annual energy production gap.

The dashed line 34 indicates a position of a first interface of the second wind turbine rotor blade design 12 and of the final wind turbine rotor blade design 16. The dashed line 36 indicates a position of a second interface of the second wind turbine rotor blade design 12 and of the final wind turbine rotor blade design 16. The part of the final rotor blade design 16 arranged between the dashed lines 34, 36 is a central section 40 that is identical or almost identical to the corresponding segment of the first wind turbine rotor blade design 10. The central section 40 together with the root extension 24 is a remaining section 42 of the second wind turbine rotor blade design 12.

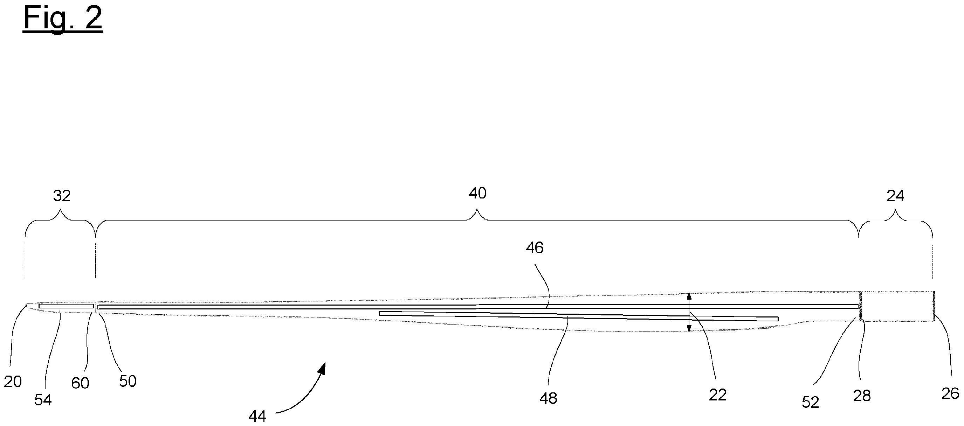

The wind turbine rotor blade 44 of Fig. 2 corresponds to the final rotor blade design 16 and has been manufactured in three pieces including a root extension 24, a central section 40 and an extended tip section 32. The inner end 26 of the root extension 24 includes connection means configured to be connected to a wind turbine rotor hub (not shown). The outer end 28 of the root extension 24 is provided with a first interface.

The central section 40 comprises a main spar cap 46 and a second spar cap 48, an outer end 50 having a second interface and an inner end 52 being connected to the first interface.

The extended tip section 32 extends from the second interface at the outer end 50 of the central section 40 to the blade tip 20. It includes a spar cap section 54 arranged as a continuation of the main spar cap 46.

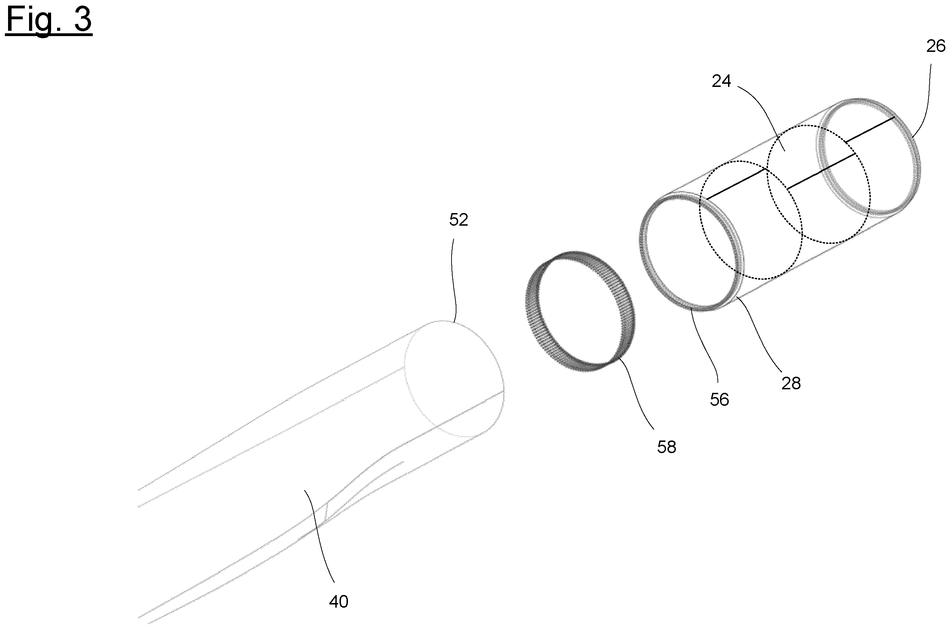

Figure 3 shows a perspective view of the root extension 24 shown near the inner end 52 of the central section 40. The root extension 24 is cylindrical. At the inner end 26, it is provided with a flange configured to be connected to a wind turbine rotor hub (not shown). At the outer end 28, the root extension 24 is provided with a flange 56 which is facing inward and adapted to receive a number of bolts 58 locked behind the flange 56 by nuts (not shown). The other ends of the bolts 58 are received in a corresponding number of threaded bushings (not shown) which are embedded in the inner end 52 of the central section 40. In this way, a strong and detachable connection is achieved.

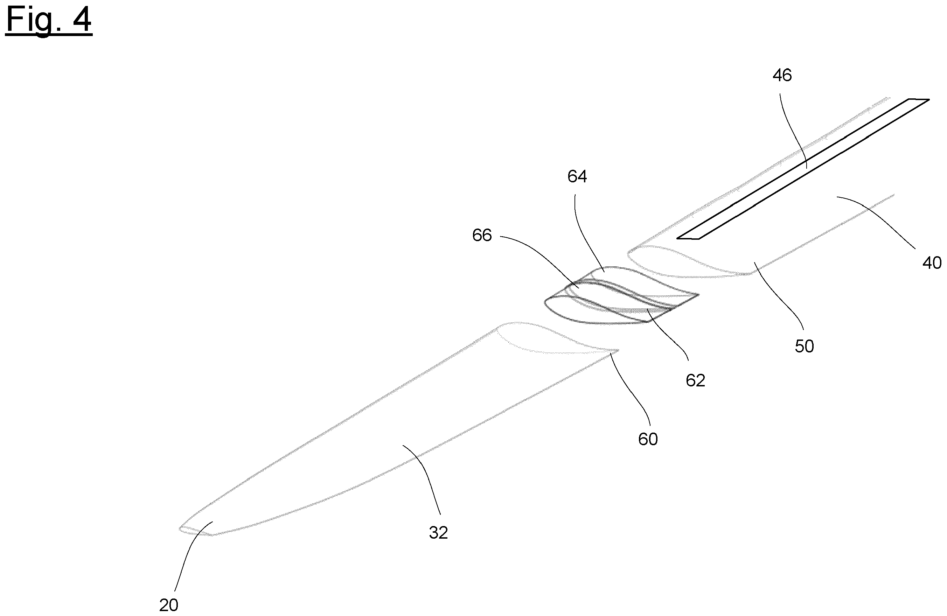

Figure 4 shows an enlarged perspective view of the extended tip section 32 to the left, and, further to the right, the outer end 50 of the central section 40. The outer end 50 of the central section 40 and an inner end 60 of the extended tip section 32 each have a cross section shaped as an aerodynamic profile.

A connector piece 62 which also has a cross section shaped as an aerodynamic profile is adapted to be received with a first end 64 in an opening within the outer end 50 of the central section 40 and with an opposing second end 66 in an opening within the inner end 60 of the extended tip section 32.

The first end 64, the second end 66 and the corresponding openings in the outer end 50 of the central section 40 and in the inner end 60 of the extended tip section 32 are adapted to be connected by glueing to form a strong, inseparable connection.

### List of reference numerals

- 10: first wind turbine rotor blade design
- 12: a second wind turbine rotor blade design
- 14: reference wind turbine rotor blade design
- 16: final wind turbine rotor blade design
- 18: blade root
- 20: blade tip
- 22: maximum chord
- 24: root extension
- 26: inner end (of root extension 24)
- 28: outer end (of root extension 24)
- 30: tip section
- 32: extended tip section
- 34: dashed line (first interface)
- 36: dashed line (second interface)
- 40: central section
- 42: remaining section
- 44: wind turbine rotor blade
- 46: main spar cap
- 48: second spar cap
- 50: outer end (of central section 40)
- 52: inner end (of central section 40)
- 54: spar cap section
- 56: flange
- 58: bolts
- 60: inner end (of the extended tip section 32)
- 62: connector piece
- 64: first end
- 66: second end
- eAEP: estimated annual energy production
- rAEP: reference annual energy production

## Claims

1. A method of designing a wind turbine rotor blade (44), the method comprising the following steps:
• providing a first wind turbine rotor blade design (10) which includes a blade root (18) and a blade tip (20),
• providing a second wind turbine rotor blade design (12) comprising the first wind turbine rotor blade design (10) and a root extension (24) having an inner end (26) configured to be connected to a wind turbine rotor hub and an outer end (28) connected to the blade root (18) of the first wind turbine rotor blade design (10),
• determining an annual energy production gap by comparing an estimated annual energy production (eAEP) of a wind turbine comprising the second wind turbine rotor blade design (12) to a reference annual energy production (rAEP) which corresponds to an estimated annual energy production of a reference wind turbine comprising a reference wind turbine rotor blade design (14) having the same length as the second wind turbine rotor blade design (12),
• providing a final wind turbine rotor blade design (16) based on the second wind turbine rotor blade design (12) by replacing a tip section (30) of the second wind turbine rotor blade design (12) with an extended tip section (32), wherein a length of the extended tip section (32) is selected such that the annual energy production gap is closed.

2. The method of claim 1, wherein the outer end (28) of the root extension (24) comprises a first interface configured to be connected to the blade root (18) of the first wind turbine rotor blade design (10).

3. The method of claim 1 or 2, wherein the step of replacing the tip section (30) of the second wind turbine rotor blade design (12) by the extended tip section (32) includes the following steps:
• removing the tip section (30) of the second wind turbine rotor blade design (12),
• providing a second interface at an outer end of a remaining section (42) of the second wind turbine rotor blade design (12) after the blade tip (20) has been removed,
• connecting the extended tip section (32) to the second interface.

4. The method of claim 3, wherein the second interface at the outer end of the remaining section (42) has a cross-section shaped as an aerodynamic profile.

5. The method of any of the claims 1 to 4, wherein the first interface at the outer end (28) of the root extension (24) has a circular cross section.

6. The method of any of the claims 2 to 5, wherein a maximum chord position is located between the first interface and the second interface.

7. The method of any of the claims 1 to 6, wherein the root extension (24) is adapted to be manufactured as a separate piece configured to be mounted to the blade root (18) of the first wind turbine rotor blade design (10).

8. The method of any of the claims 1 to 7, wherein the extended tip section (32) is adapted to be manufactured as a separate piece configured to be mounted to the remaining section (42).

9. The method of any of the claims 1 to 6, wherein the final wind turbine rotor blade design (16) is adapted to be manufactured in one piece.

10. The method of claim 8, wherein the root extension (24) and the extended tip section (32) are configured to be mounted by different connection technologies.

11. The method of any of the claims 1 to 10, wherein the root extension (24) is selected from a set of predefined root extensions having different lengths and/or wherein the extended tip section (32) is selected from a set of predefined extended tip sections having different lengths.

12. The method of any of the claims 1 to 11, wherein the step of determining the annual energy production gap includes calculating the estimated annual energy production (eAEP) and/or the reference annual energy production (rAEP) based on site-specific conditions, including environmental conditions and/or wind turbine-related conditions.

13. A wind turbine rotor blade (44) corresponding to the final rotor blade design (16) of any of the claims 1 to 12 and manufactured by the following steps:
• producing a wind turbine rotor blade central section (40) corresponding to a remaining section (42) of the second wind turbine rotor blade design,
• producing the extended tip section (32)
• producing the root extension (24).

14. The wind turbine rotor blade (44) of claim 13, wherein the wind turbine rotor blade central section (40) and the extended tip section (32) are manufactured in one piece.

15. The method of claim 13, wherein the wind turbine rotor blade central section (40), the extended tip section (32) and the root extension (24) are produced as separate pieces and the extended tip section (32) and the root extension (24) are mounted to the wind turbine rotor blade central section (40).
